# EUROPEAN PATENT SPECIFICATION

(11) **EP 2 772 306 B1**
(45) Date of publication and mention of the grant of the patent: **28.10.2020**
(21) Application number: 14157523.3
(22) Date of filing: 03.03.2014
(51) Int. Cl.: B01J 19/00, B01L 3/00, B81B 1/00, B81C 1/00

(54) **METHOD FOR MANUFACTURING MICROFLUIDIC CHIPS, DEVICE FOR FUNCTIONALIZING MICROFLUIDIC CHIPS, MICROFLUIDIC CHIP AND DEVICE FOR HOLDING A MICROFLUIDIC CHIP**
VERFAHREN ZUR HERSTELLUNG VON MIKROFLUIDIK-CHIPS, VORRICHTUNG ZUR FUNKTIONALISIERUNG VON MIKROFLUIDIK-CHIPS, MIKROFLUIDIK-CHIP UND EINE HALTEVORRICHTUNG FÜR EINEN MIKROFLUIDIK-CHIP
PROCÉDÉ DE FABRICATION DES PUCES MICROFLUIDIQUES, DISPOSITIF POUR LA FONCTIONNALISATION DE PUCES MICROFLUIDIQUES, PUCE MICROFLUIDIQUE ET DISPOSITIF DE MAINTIEN EN POSITION D'UNE PUCE MICROFLUIDIQUE

(30) Priority: 01.03.2013 NL 2010377
(43) Date of publication of application: 03.09.2014
(73) Proprietor: Micronit Microtechnologies B.V., 7521 PV Enschede (NL)
(72) Inventor: OLDE RIEKERINK, Marinus Bernardus, 7582 EL Losser (NL); BUESINK, Wilfred, 7557 RW Hengelo (NL); KOELWIJN-HUBERS, Arenda Hendrika Jacoba, 7545 LR Enschede (NL); BLOM, Marko Theodoor, 7491 LG Delden (NL); VAN 'T OEVER, Ronny, 7214 DL Epse (NL)
(74) Representative: Slikker, Wilhelmina Johanna

(56) References cited:
- EP-A2- 1 221 617
- EP-A2- 2 269 947
- WO-A1-2012/026942
- WO-A2-2008/072968
- WO-A2-2011/057091
- US-A1- 2004 000 045

## Description

The invention relates to a method for manufacturing microfluidic chips having at least a capillary for through-flow of a fluid. The term "capillary" as used herein denotes a channel having a closed cross-section.

Microfluidic chips are used for various applications, such as micro reactors, micro mixers and cross-capillary chips. Such microfluidic chips are for example manufactured by providing a glass sheet on which channels are etched. These channels are then closed by a second glass sheet which is bonded to the first glass sheet. This provides for a microfluidic chip comprising very small capillaries, which can be used in instruments, which perform analytic tests for example. It is furthermore possible to build such microfluidic chips from glass, ceramics, plastics, silicon or combinations thereof. Instead of etching a channel into the substrate, a channel may also be formed on the substrate by arranging two parts of an intermediate layer in a mutually spaced position. The channel is then defined by the space between these two parts of the intermediate layer. Alternatively, capillaries could be formed within the material from which the microfluidic chips are made. Connections in the microfluidic chips can be provided by holes in one of the sheets or capillaries running to the edges of the microfluidic chips.

After the microfluidic chips are build onto the glass sheet, the glass sheet or wafer is separated into individual microfluidic chips, for example by wet laser cutting or by wet cutting with a saw, a technique known as 'dicing'.

After separating the glass sheet, functionalization of the chips may take place by running a functionalization fluid through the capillaries.

Further, EP 2 269 947 A2 discloses a method for manufacturing and testing microfluidic chips having at least one capillary for through-flow of a fluid. The method comprises the steps of providing a starting material, forming at least one shared capillary in the starting material, arranging a plurality of functional elements in or over the shared capillary, thus forming a plurality of chips, testing the chips by supplying a test fluid to the shared capillary; and dividing the starting material into separate chips.

EP 1 221 617 A2 discloses a biochip comprising a microchannel having a liquid outlet port, bubble release port and a liquid outlet port with an associated bubble release port. A multiplicity of tests can be performed often by coating the bore of the microchannel with various adhesion mediating proteins or the use of chemoattractants. US 2004/000045 A1 discloses an apparatus and methods for cutting a sheet of material into single supports where each of the single supports has an array area to which is bound an array of chemical compounds. The sheet comprises a plurality of score lines. The apparatus comprises an input conveyor, an output conveyor, a driver for moving the sheet from the input conveyor to the output conveyor and a breaking mechanism for breaking the sheet into single supports. The input conveyor, the output conveyor and the driver are each adapted to move the sheet without contacting the array area and an area on a surface of the support opposite the array area. Likewise, the breaking mechanism breaks the sheet into the single supports along the score lines without contacting the array area and an area on a surface of the support opposite the array area.

Functionalization of the chips manufactured on a glass sheet takes a lot of time and results accordingly in higher costs. It is now an object of the invention to reduce these disadvantages.

This object is achieved by a method according to the invention of claim 1.

As the microfluidic chips comprise at least one common capillary and the chips are functionalized before separating them from the wafer, it is possible to have a functionalization fluid flow through the at least one common channel or capillary and functionalize the chips, which are part of this common capillary. So, when functionalizing the chips it is possible to connect the at least one common capillary only once and then functionalize a plurality of chips. Only after the chips are functionalized, the wafer is cut into separate parts.

Preferably, as is shown in the figures, the wafer is cut in such a manner, that the shared capillary is also cut. The cut ends of the shared capillary will thereby form an inlet or outlet of the chip itself.

The functionalization fluid may be chosen from, but not restricted thereto, the group comprising organosilicon compounds, hydrophilic coating solutions, hydrophobic coating solutions, grafting solutions, gel-based solutions and protein-based solutions. By functionalizing the shared capillary by running such functionalization fluids therethrough the channel surface of all chips is functionalized by silanization, hydrophilization, hydrophobization, grafting of DNA fragments or synthetic oligonucleotides, gel loading for capillary electrophoresis, or immobilization of biomolecules, respectively.

Preferably, step (d) is performed by a dry and/or clean dividing method.

A disadvantage of the commonly used wet dividing methods for cutting the wafer into chips is that the capillaries will fill up with dirt and water. This is especially disadvantageous in the current method, because this may damage the already functionalized capillaries. These disadvantages are overcome by using a dry and/or clean dividing method.

For example, step (d) is performed by first scratching a scratch line in the starting material and by then breaking the starting material over the scratch line.

Such a dividing technique is clean and dry and thus overcomes said above described disadvantage. The scratch line may for example be made with a (glass) cutting wheel. Such a method is also known as scribing.

In an embodiment of the method according to the invention step (b) is performed by arranging a channel on or in a first layer of the starting material and closing off this channel by arranging a second layer of the starting material thereon. Said channel may for example be provided by etching or sand blasting.

In an embodiment of the method according to the invention said starting material is a sheet material.

In another embodiment of the method according to the invention said starting material is made of a material chosen from the group comprising glass, silicon, plastics and ceramics.

The capillary provided in the wafer could either be a straight capillary or a capillary having a repeating pattern with a pitch corresponding to the pitch of the chips.

In another embodiment of the method according to the invention the starting material comprises at least three layers, wherein at least one shared capillary is formed between a first layer and a second layer of the starting material, and wherein at least one shared capillary is formed between the second layer and a third layer of the starting material.

The wafer with multiple layers is easily functionalized prior to cutting the wafer into chips, such that chips with multiple layers may easily be made. The functionalization fluid for functionalizing the shared capillary between the first layer and the second layer of the starting material may be different from the functionalization fluid for functionalizing the shared capillary between the second layer and the third layer of the starting material, such that the two capillaries each have a different function. Alternatively, the functionalization fluid may be the same for the two capillaries such that the two capillaries will obtain the same function. The shared capillaries may for example be provided by arranging channels on or in opposing main planes of the second layer of the starting material and by closing off these channels by arranging the first and third layers of the starting material thereon.

So with the method according to the invention it is possible to have a plurality of chips functionalized while the at least one common capillary is supplied with a functionalization fluid. It is no longer necessary to reconnect the fluid supply to each and every separate chip.

Step (c) may be performed by supplying a plurality of functionalization fluids to the shared capillary, wherein said plurality of functionalization fluids are supplied subsequently.

By supplying a plurality of functionalization fluids to the shared capillary, in particular if different functionalization fluids are supplied thereto, the shared capillary may obtain a multilayer of functionalities. After supplying a first functionalization fluid to the shared capillary the functionalization fluid may be left to dry or be actively dried before the next functionalization fluid is supplied thereto.

A device for functionalizing microfluidic chips is presented for information, the device having at least one capillary for through-flow of a fluid, said device comprising a material holder for holding a starting material in a fixed position during functionalization, said material holder comprising at least one inlet connector for connecting at least one fluidic inlet of at least one shared capillary formed in the starting material to a functionalization fluid supply.

With use of the material holder or wafer holderthe wafer can easily be held in place during functionalization of the capillary or capillaries. The inlet connector may be arranged at a predetermined location of the material holder such that the shared capillary may be provided in the starting material at a predetermined location corresponding to the location of the inlet connector, such that the connection of the shared capillary to the functionalization fluid supply may easily be provided.

In an embodiment of the device the material holder comprises at least one outlet connector for connecting at least one fluidic outlet of at least one shared capillary formed in the starting material to a functionalization fluid collector.

By providing an outlet connector for connecting the fluidic outlet of a shared capillary formed in the starting material to a functionalization fluid collector, excessive functionalization fluid can be collected and optionally reused for functionalizing a next wafer.

For holding the starting material the material holder preferably comprises a recess for receiving said starting material, wherein said inlet connector and/or said outlet connector is arranged in an edge of the material holder.

The starting material may be provided in the recess in such a way that an edge of the starting material comprising an inlet of the shared capillary is adjacent to said edge of the material holder comprising said inlet connector and/or in such a way that an edge of the starting material comprising an outlet of the shared capillary is adjacent to said edge of the material holder comprising said outlet connector, such that the shared capillary may connect to the inlet connector and/or the outlet connector.

Such a recess thus offers the advantage of holding the starting material in a determined position, in which determined position the shared capillary may easily connect to the inlet connector and/or the outlet connector.

The recess may be formed such and/or have a size such that the starting material is clamped or snapped into the recess.

Such a recess offers the advantage of firmly holding the starting material in the determined position in the recess.

For starting materials comprising multiple layers it is preferred that said material holder comprises at least two inlet connectors and/or at least two outlet connectors for connecting at least two shared capillaries formed in different layers of the starting material to a functionalization fluid supply and/or a functionalization fluid collector.

A microfluidic chip is further presented having at least one functionalized capillary for through-flow of a fluid manufactured by performing the steps of the method according to any of the claims 1 - 9, said method comprising the steps of:
(a) providing a starting material;
(b) forming at least one shared capillary in the starting material, said shared capillary comprising an fluidic inlet and an fluidic outlet;
(c) functionalizing the chips by supplying a functionalization fluid to the shared capillary; and
(d) dividing the starting material into separate chips.

As a result of said shared capillary, which extends parallel to a main plane of the starting material, an inlet and an outlet of the capillary of the chip are arranged in a side edge of the chip. The inlet and outlet may be arranged in the same side edge or in different, for example opposing, side edges. An advantage of the chip manufactured by the method according to the invention comprising said inlet and outlet arranged in a side edge of the chip is that the main planes of the chip, i.e. the upper and lower plane of the chip, remain free of in- and outlets. As a result thereof, the free space(s) of the upper and lower plane can be used for other functionalities, or the chips may be made relatively small.

The chip resulting from the method according to the invention or any other (functionalized) chip can be held during use by a similar chip holding device as the wafer holding device, wherein the size and shape of the chip holding device are adapted to the size and shape of the chip. As such a device for holding a microfluidic chip is further shown, for example a chip according to claim 11 or 12, said chip having at least one functionalized capillary for through-flow of a fluid, comprising a chip holder for holding said chip in a fixed position during use, said chip holder comprising at least one inlet connector for connecting at least one inlet of the at least one functionalized capillary of the chip to a fluid supply and/or at least one outlet connector for connecting at least one outlet of the at least one functionalized capillary of the chip to a fluid collector.

Preferably the chip holder comprises a recess for receiving said chip, wherein said inlet connector and/or said outlet connector is arranged in an edge of the recess of the chip holder. Such a recess offers the advantage of holding the chip in a determined position, in which determined position the inlet or outlet of the chip may easily connect to the inlet connector and/or the outlet connector.

The recess may be formed such and/or has a size such that the chip can be clamped, glued or snapped in the recess.

Such a recess offers the advantage of firmly holding the chip in the determined position in the recess.

For chips comprising multiple layers it is preferred that said chip holder comprises at least two inlet connectors and/or at least two outlet connectors for connecting at least two functionalized capillaries formed in different layers of the chip to a fluid supply and/or a fluid collector.

These and other advantages of the invention will be elucidated with the accompanying drawings.
Figures 1A - 1C show the different steps of a first embodiment of the method according to the invention;
Figures 2A and 2B show the different steps of a second embodiment of the method according to the invention;
Figures 3A and 3B show the different steps of a third embodiment of the method according to the invention;
Figures 4A - 4C show the different steps of a fourth embodiment of the method according to the invention;
Figures 5A and 5B show the different steps of a fifth embodiment of the method according to the invention
Figures 6A and 6B show a wafer holder, wherein figure 6A is a perspective view and figure 6B a side view.
Figure 7 shows the wafer holder according to figure 6A holding the wafer of figure 2A.
Figure 8 shows the wafer holder according to figure 6A holding the wafer of figure 3A.
Figure 9 shows the wafer holder according to figure 6A holding the wafer of figure 4A.
Figure 10 shows the wafer holder according to figure 6A holding the wafer of figure 5A.

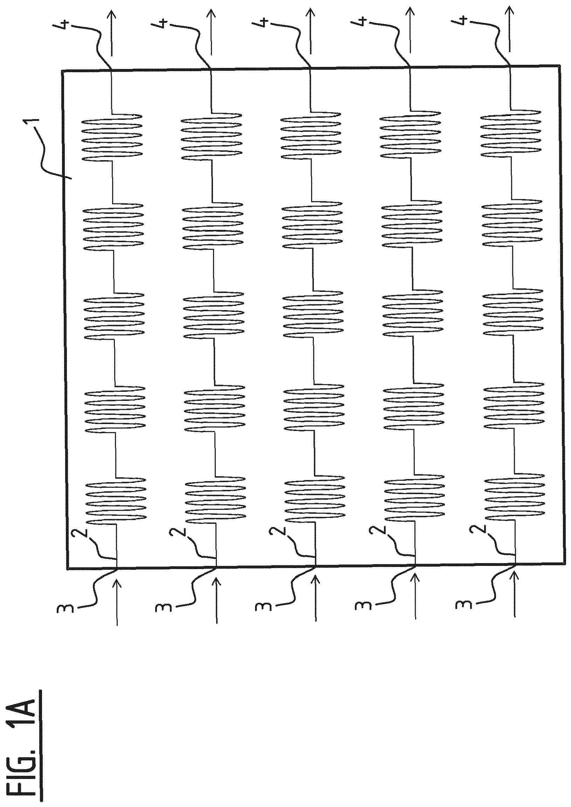

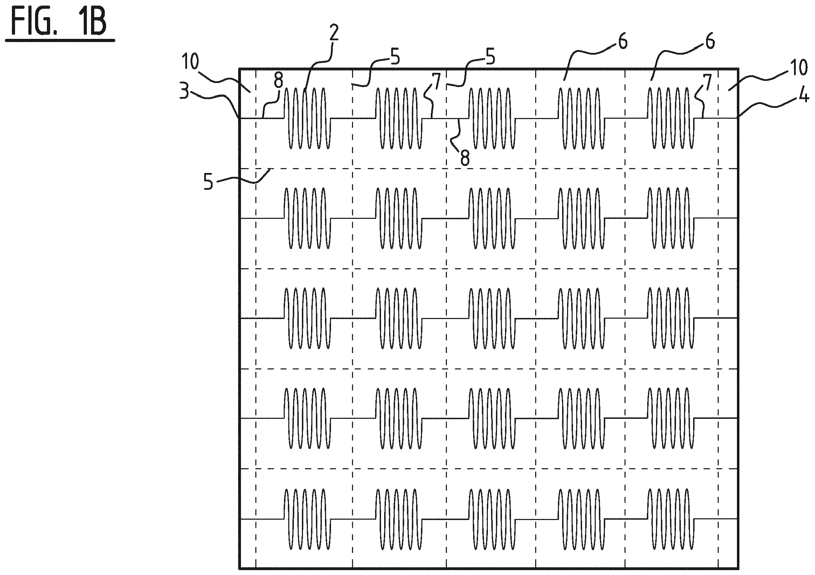

In figures 1A and 1B a wafer 1 is schematically shown in a top view. The wafer 1 is for example made of glass, silicon, plastics or ceramics. In the wafer 1 five separate parallel common capillaries 2 are provided. The shared capillaries 2 have a repeating pattern with a pitch corresponding to the pitch of the chips 6. The capillaries 2 can be provided by for example etching or sand blasting channels in a first layer of sheet material and by subsequently closing off the channels by a second layer of sheet material. Each of the five shared capillaries 2 comprises a fluidic inlet 3 and a fluidic outlet 4. To the fluidic inlets 3 a fluid supply (not shown) may be connected for supplying a functionalization fluid to the capillaries 2. By running the functionalization fluid through the shared capillaries 2 the chips on the wafer 1 are simultaneously functionalized prior to cutting the chips from the wafer. The shared capillaries 2 are formed in the wafer 1 such that an outlet 7 of a first chip 6 is connected to an inlet 8 of an adjacent chip 7, see figure 1B. The functionalization fluid exits the shared capillaries 2 via the fluidic outlets 4. The fluidic outlets 4 may for example be connected to a fluid collector for collecting the functionalization fluid.

After functionalizing the shared capillaries 2 of the wafer 1 the wafer 1 is cut into twenty five microfluidic chips 6 by cutting the wafer 1 over separation lines 5, see figure 1B. The separation lines 5 are for example scratch lines that are formed in the wafer 1 and that form weakened portions of the wafer 1, so that the wafer may be broken into the twenty five chips 6 over the scratch lines 5. The scratch lines 5 may be provided by cutting the scratch lines in the outer surface of the wafer 1 by means of a (glass) cutting wheel. This method of dividing the wafer 1 is also called scribing, which is a dry and clean technique, such that the functionalized capillaries of the microfluidic chips 6 are not damaged. As is clear from figure 1B, at both connecting sides of the wafer 1 a part 10 of wafer material is lost, which part 10 comprises the fluidic inlets 3 and fluidic outlets 4 of the shared capillaries 2. The method according to the inventions saves such an amount of time, that this loss of material is considered acceptable. Alternatively the fluidic inlets 3 may be formed by the inlets 8 of the chips 6 arranged closest to the fluidic inlets 3 and the fluidic outlets 4 may be formed by the outlets 7 of the chips 6 arranged closest to the fluidic outlets 4, such that parts 10 are not required and no loss of material occurs.

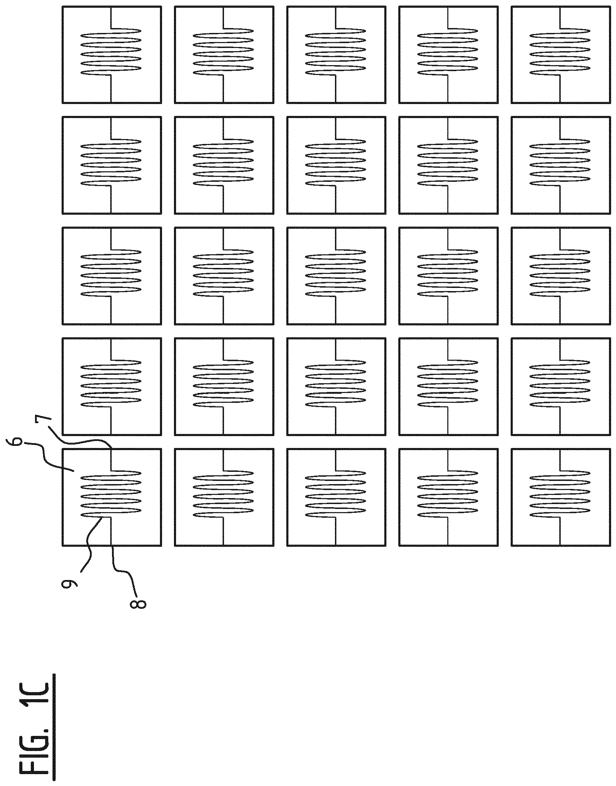

Figure 1C shows the twenty five chips 6 resulting from the divided wafer 1 of figures 1A and 1B. Each of the chips 6 has a functionalized capillary 9 comprising a part of the shared capillary 2 of the wafer 1. As is clearly shown in figure 1C, the inlets 8 and outlets 7 of the chips 6 are arranged in two opposing side edges of each chip 6, and not in the upper or lower planes thereof. The inlets 8 and outlets 7 are formed by the cut ends of the shared capillaries 2. In use, the inlet 8 may be used as an outlet and the outlet 7 may be used as an inlet.

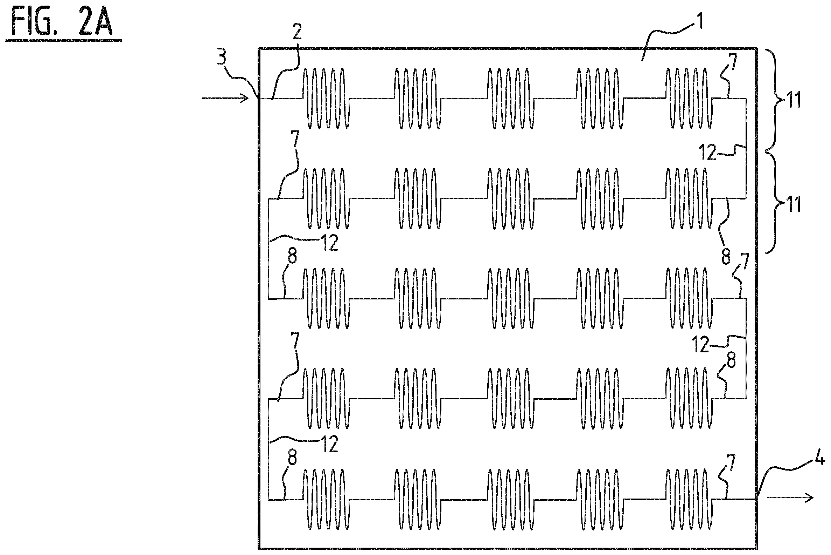

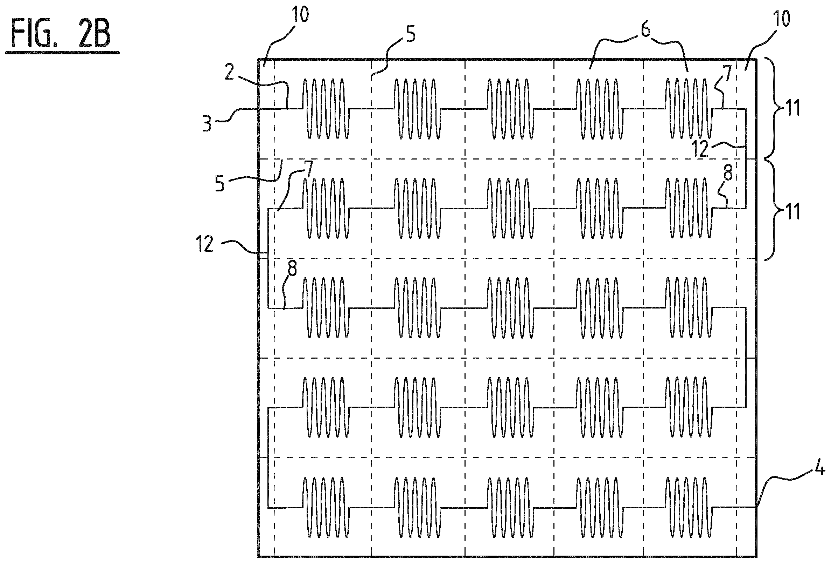

The second embodiment of the method shown in figures 2A and 2B differs from the method of figures 1A - 1C in that only one fluidic inlet 3 and only one fluidic outlet 4 is provided, and in that the twenty five chips all comprise one shared capillary 2. The outlet 7 of each last chip 6 of each of the first four rows 11 of microfluidic chips 6 is connected to the inlet 8 of each first chip 6 of the next row 11 via a connecting part 12 of the shared capillary 2. Last and first are defined here in the direction of fluid flow, such that the last and first chips 6 are provided alternatingly on two opposing end zones of the wafer 1. Because only one fluidic inlet 3 and only one fluidic outlet 4 is provided only one connection with a fluid supply and only one connection with a fluid collector has to be provided. Figure 2B shows that the parts 10 of lost material comprise the connecting parts 12 of the shared capillary 2. After cutting the wafer 1 of figures 2A and 2B over the separation lines 5 shown in figure 2B the resulting chips 6 are the same as shown in figure 1C. The inlets 8 and outlets 7 are formed by the cut ends of the shared capillary 2. In use, the inlet 8 may be used as an outlet and the outlet 7 may be used as an inlet.

It is noted that only the differences with respect to the first embodiment of figures 1A - 1C are described. For a further explanation of figures 2A and 2B the reader is referred to the description of figures 1A - 1C.

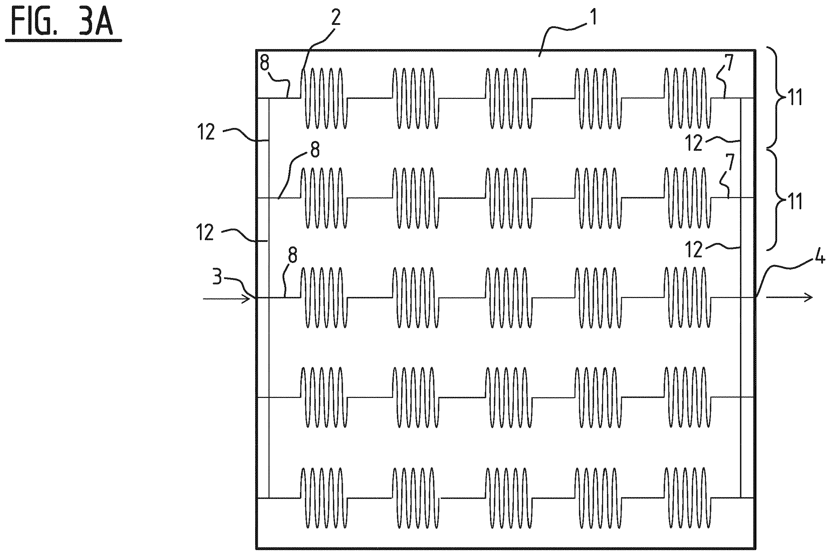

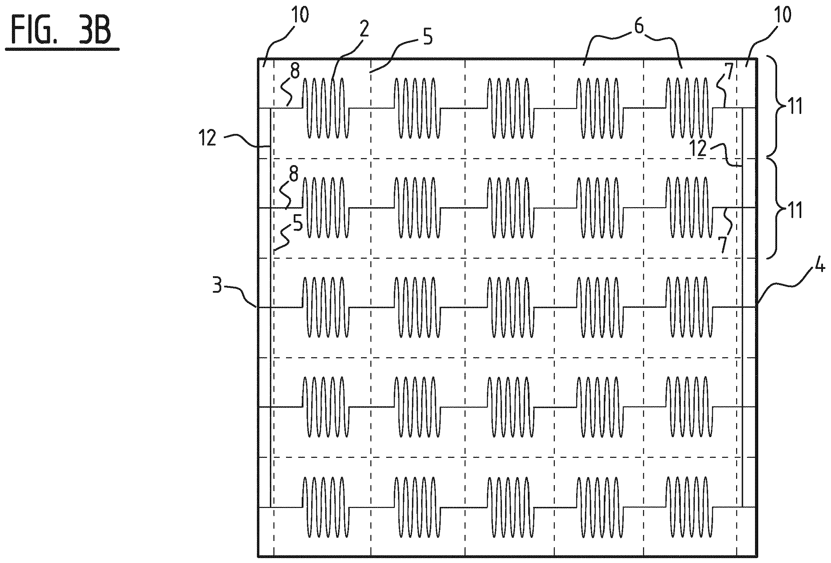

The third embodiment of the method shown in figures 3A and 3B differs from the method of figures 1A - 1C in that only one fluidic inlet 3 and only one fluidic outlet 4 is provided. Each row 11 of microfluidic chips 6 comprises one shared capillary 2, such that in total five shared capillaries 2 are provided for the twenty five chips. The five shared capillaries 2 are all connected to the one fluidic inlet 3 and the one fluidic outlet 4 via connecting parts 12 of the shared capillaries 2. A first connecting part 12 extends between the inlets 8 of the first chip 6 of each row 11 and a second connecting part 12 extends between the outlets 7 of the last chip 6 of each row 11. First and last are defined here in the direction of fluid flow. Because only one fluidic inlet 3 and only one fluidic outlet 4 is provided only one connection with a fluid supply and only one connection with a fluid collector has to be provided. Figure 3B shows that the parts 10 of lost material comprise the first and second connecting parts 12 of the shared capillaries 2. After cutting the wafer 1 of figures 3A and 3B over the separation lines 5 shown in figure 3B the resulting chips 6 are the same as shown in figure 1C. The inlets 8 and outlets 7 are formed by the cut ends of the shared capillary 2. In use, the inlet 8 may be used as an outlet and the outlet 7 may be used as an inlet.

It is noted that only the differences with respect to the first embodiment of figures 1A - 1C are described. For a further explanation of figures 3A and 3B the reader is referred to the description of figures 1A - 1C.

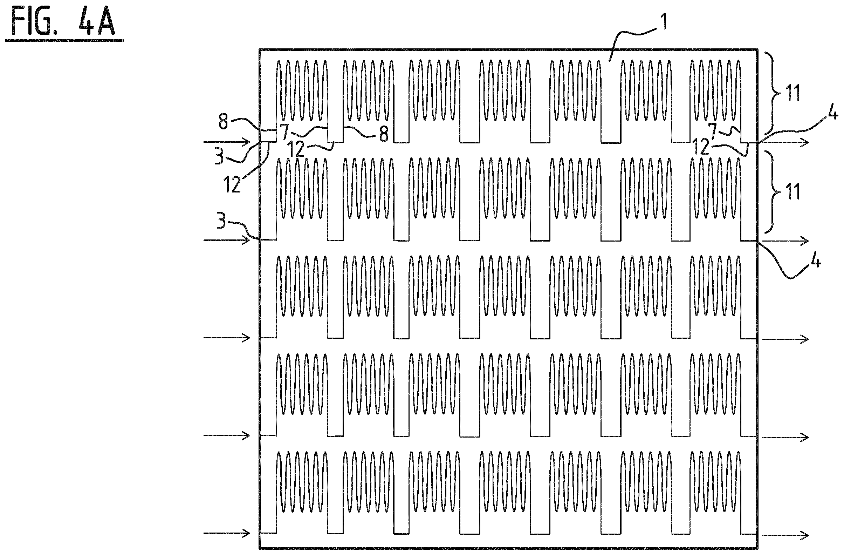

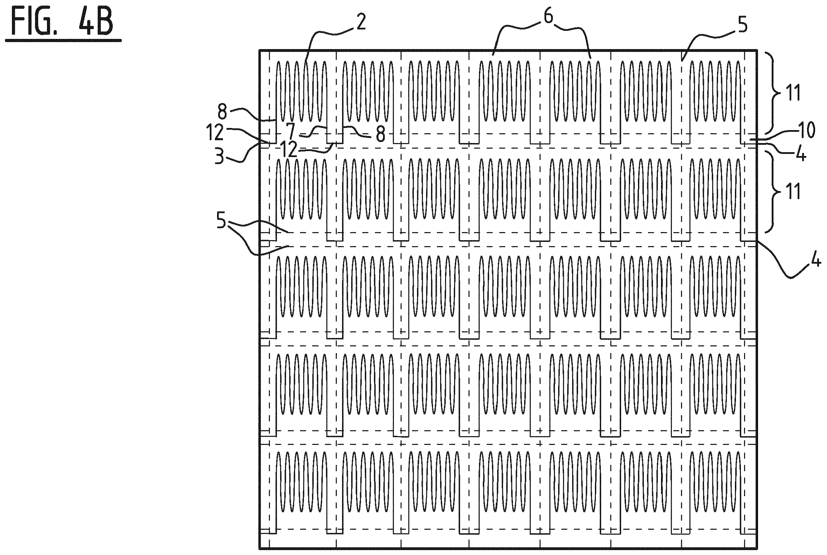

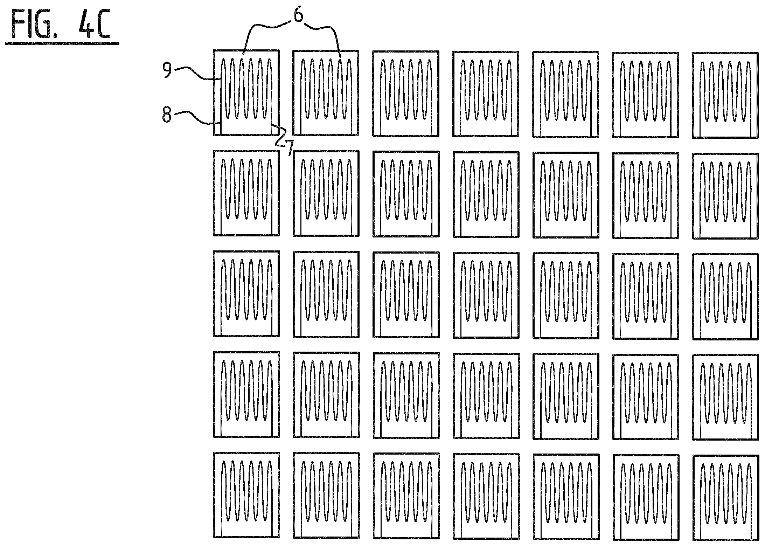

The fourth embodiment of the method shown in figures 4A - 4C differs from the method of figures 1A - 1C in that the directions of the inlets 8 and outlets 7 of the chips 6 are orthogonal to the longitudinal direction of each row 11 of chips 6. Due to these opposing directions a connecting part 12 of the shared capillaries 2 extending parallel to the longitudinal direction of each row 11 has to be provided between each outlet 7 of a first chip 6 and an inlet 8 of a successive chip. Also, a first connecting part 12 is provided between the inlet 8 of each first chip 6 of each row 11 and the fluidic inlet 3 of each row 11 and a second connecting part 12 is provided between the outlet 7 of each last chip 6 of each row 11 and the fluidic outlet 4 of each row 11. First, last and successive are defined here in the direction of fluid flow. Due to the presence of the connecting parts 12 extending between each outlet 7 of a chip 6 and an inlet 8 of the successive chip 6, parts 10 of wafer material comprising the connecting parts 12 are lost between two adjacent rows 11 of chips 6, see figure 4B. The parts 10 comprising the connecting parts 12 are defined by two separation lines 5 extending parallel with respect to each other between each two adjacent rows 11 of chips 6. The side parts 10 comprising the first and second connecting parts 10 are also lost. The method according to the invention saves such an amount of time, that this loss of material is considered acceptable. A further difference with respect to the method of figures 1A - 1C is that each row 11 comprises seven chips 6 instead of five chips. This is clearly shown in figure 4C, which shows the thirty five chips 6 resulting from the wafer 1 after dividing the wafer 1 over the separation lines 5. As is further clearly shown in figure 4C, the inlets 8 and outlets 7 of the chips 6 are arranged in one side edge of each chip 6, and not in the upper or lower planes thereof. The inlets 8 and outlets 7 are formed by the cut ends of the shared capillaries 2. In use, the inlet 8 may be used as an outlet and the outlet 7 may be used as an inlet.

It is noted that only the differences with respect to the first embodiment of figures 1A - 1C are described. For a further explanation of figures 4A - 4C the reader is referred to the description of figures 1A - 1C.

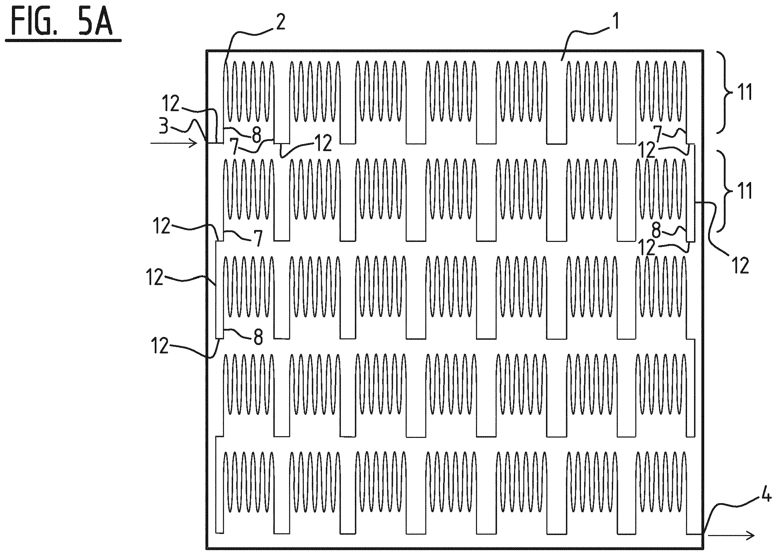

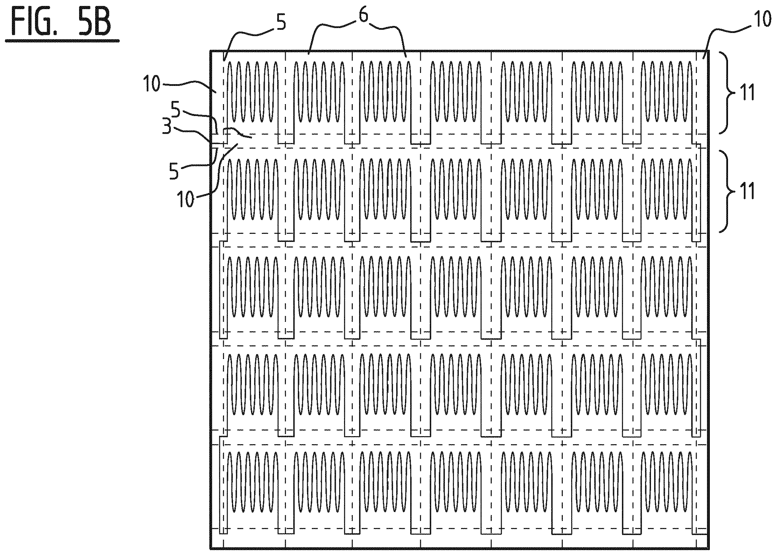

The fifth embodiment of the method shown in figures 5A and 5B is a combination of the second and fourth embodiment of the method according to the invention. The fifth embodiment thus differs from the method of figures 1A - 1C in that only one fluidic inlet 3 and only one fluidic outlet 4 is provided, and in that all the chips 6 of the wafer 1 comprise one shared capillary 2. The outlet 7 of each last chip 6 of each of the first four rows 11 of microfluidic chips 6 is connected to the inlet 8 of each first chip 6 of the next row 11 via a connecting part 12 of the shared capillary 2. In addition, the fifth embodiment thus differs from the method of figures 1A - 1C in that the direction of the inlets 8 and outlets 7 of the chips 6 is orthogonal to the longitudinal direction of each row 11 of chips 6. Due to these opposing directions connecting parts 12 of the shared capillary 2 extending parallel to the longitudinal direction of each row 11 have to be provided between each outlet 7 of a first chip 6 and an inlet 8 of a successive chip. Also, a first connecting part 12 is provided between the inlet 8 of the first chip 6 of the first row 11 and the one fluidic inlet 3 and a second connecting part 12 is provided between the outlet 7 of the last chip 6 of the last row 11 and the one fluidic outlet 4. First, last and successive are defined here in the direction of fluid flow. Because only one fluidic inlet 3 and only one fluidic outlet 4 is provided only one connection with a fluid supply and only one connection with a fluid collector has to be provided. Due to the presence of the connecting parts 12 extending between each outlet 7 of a chip 6 and an inlet 8 of the successive chip 6, parts 10 of wafer material comprising the connecting parts 12 are lost between two adjacent rows 11 of chips 6. The parts 10 comprising the connecting parts 12 are defined by two separation lines 5 extending parallel with respect to each other between each two adjacent rows 11 of chips 6, see figure 5B. The side parts 10 comprising the first and second connecting parts 12 are also lost. The method according to the invention saves such an amount of time, that this loss of material is considered acceptable. A further difference with respect to the method of figures 1A - 1C is that each row 11 comprises seven chips 6 instead of five chips. After cutting the wafer 1 of figures 5A and 5B over the separation lines 5 shown in figure 5B the resulting chips 6 are the same as shown in figure 4C, see also the description relating to figure 4C. The inlets 8 and outlets 7 are formed by the cut ends of the shared capillary 2. In use, the inlet 8 may be used as an outlet and the outlet 7 may be used as an inlet.

It is noted that only the differences with respect to the first embodiment of figures 1A - 1C are described. For a further explanation of figures 5A and 5B the reader is referred to the description of figures 1A - 1C.

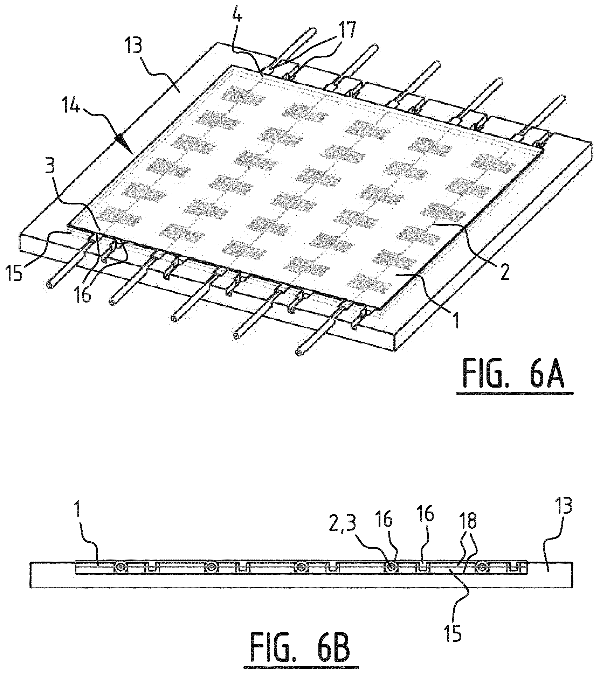

Figures 6A and 6B show a wafer holder 13 holding the wafer 1 of figure 1A during supplying of the functionalization fluid to the shared capillaries 2. The wafer holder 13 comprises a recess 14 in which the wafer 1 is received. The wafer 1 may be firmly held in the recess 14 by clamping or snapping the wafer 1 in the recess 14. The circumferential edges 15 of the wafer holder 13 comprise a plurality of inlet connectors 16 that are arranged at predetermined locations and a plurality of outlet connectors 17 that are arranged at predetermined locations. The fluidic inlets 3 provided in the edge of the wafer 1 connect to a part of the inlet connectors 16 and the fluidic outlets 4 provided in the opposing edge of the wafer 1 connect to a part of the outlet connectors 17. In particular, the fluidic inlets 3 connect to those inlet connectors 16 that are in register therewith after mounting the wafer 1 in the recess 14 and the fluidic outlets 4 connect to those outlet connectors 17 that are in register therewith after mounting the wafer 1 in the recess 14. The inlet connectors 16 are connected to a functionalization fluid supply (not shown) for supplying functionalization fluid to the shared capillaries 2 via the fluidic inlets 3 of the wafer 1. The outlet connectors 17 are connected to a functionalization fluid collector (not shown) for collecting functionalization fluid discharged from the shared capillaries 2 via the fluidic outlets 4 of the wafer 1.

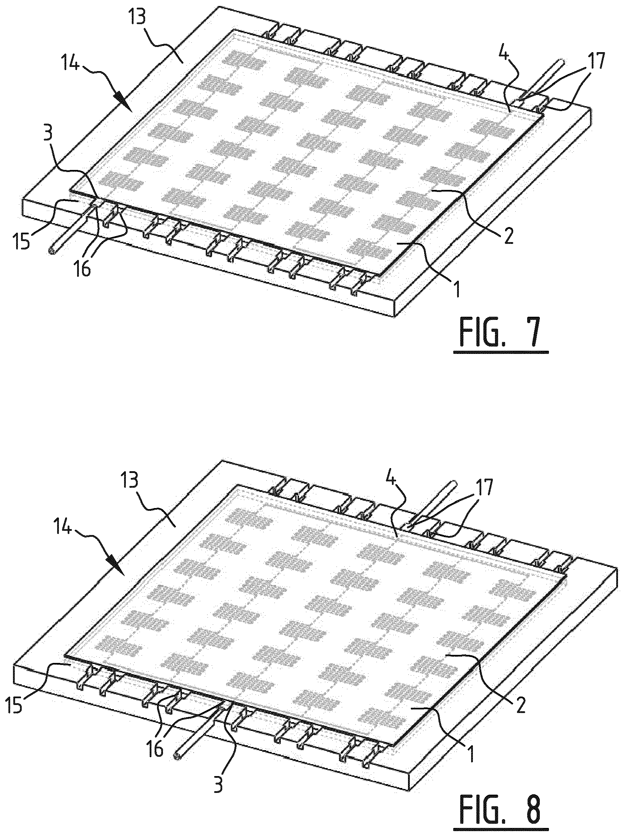

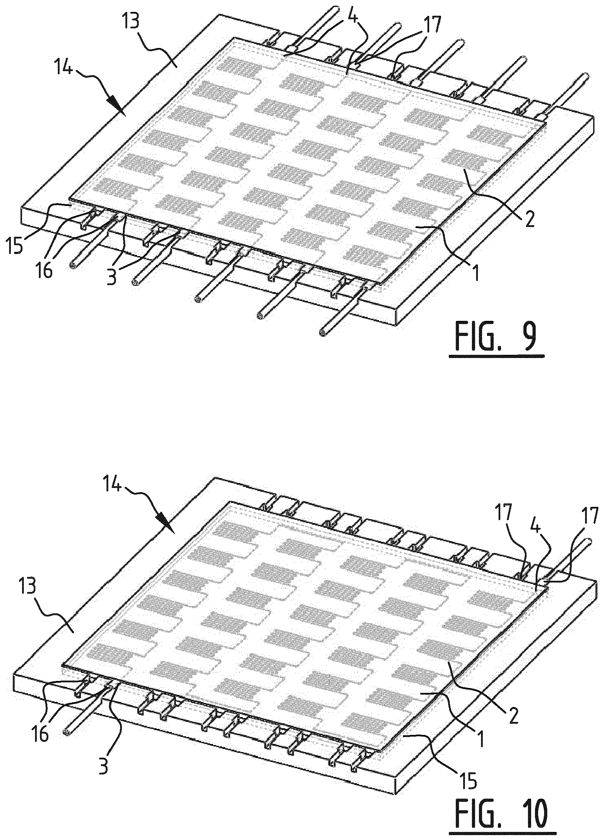

The wafer holder 13 is suitable for holding all the wafers 1 of the figures 1 - 5 if the wafers 1 have substantially the same size, even if less fluidic inlets 3 and fluidic outlets 4 are provided or even if the fluidic inlets 3 and fluidic outlets 4 are arranged at different locations. Also in that case only the inlet collectors 16 and outlet collectors 17 that are in register with a fluidic inlet 3 or a fluidic outlet 4 of the wafer 1 are connected and the other inlet collectors 16 and other outlet collectors 17 are not used for that particular wafer 1. In particular, figure 7 shows the wafer holder 13 holding the wafer of figure 2A, figure 8 shows the wafer holder 13 holding the wafer of figure 3A, figure 9 shows the wafer holder 13 holding the wafer of figure 4A, and figure 10 shows the wafer holder 13 holding the wafer of figure 5A.

Optionally a wafer holder 13 comprising less, for example five, inlet connectors 16 and outlet connectors 17 may be provided. The location of the connectors may be adapted to one type of wafer, for example the wafer 1 of figure 1A, wherein the location of the fluidic inlets 3 or fluidic outlets 4 of other wafers, for example the wafer shown in figure 4A, may be adapted thereto by arranging the shared capillaries 2 and thereby the fluidic inlets 3 and fluidic outlets 4 in accordance with the locations of the inlet and outlet connectors 16, 17.

As is further shown in figure 6B, the wafer 1 comprises two layers 18 of starting material that are bonded together, wherein the capillaries 2 are formed between the two layers 18.

In a second embodiment of the wafer holder 13 (not shown), the inlet connectors 16 and outlet connectors 17 maybe arranged at different heights of the edge of the recess 14 and the recess 14 may have an increased depth. As a result thereof, the wafer holder 13 is suitable for holding wafers 1 with multiple layers 18, in particular three or more layers, wherein the shared capillaries 2 are formed between different adjacent layers 18.

Although the invention has been illustrated by way of an exemplary embodiment, it is not intended to be limited thereto. Many variations and modifications are conceivable. For example, the wafer may comprise any number of layers and/or any number of shared capillaries and/or any number of chips. Also, the flow direction of the fluid flowing through the shared capillaries 2 and/or the capillary 9 of a chip 6 may be reversed, such that a (fluidic) inlet is used as a (fluidic) outlet.

Consequently, the scope of the invention is defined solely by the following claims.

## Claims

1. Method for manufacturing microfluidic chips (6) having at least one capillary for through-flow of a fluid, **characterized by** the steps of:
(a) providing a starting material;
(b) forming at least one shared capillary in the starting material, said shared capillary comprising an fluidic inlet (3) and an fluidic outlet (4);
(c) functionalizing the chips (6) by supplying a functionalization fluid to the shared capillary; and
(d) dividing the starting material into separate chips (6).

2. Method according to claim 1, wherein in step (d) the chips (6) are separated from a wafer (1) by cutting the wafer (1) in such a manner that the shared capillary (2) is also cut, the cut ends of the shared capillary (2) thereby forming an inlet (3) or outlet (4) of the chips (6).

3. Method according to claim 1 or 2, wherein step (d) is performed by a dry and/or clean dividing method.

4. Method according to claim 2, wherein step (d) is performed by first scratching a scratch line (5) in the starting material and by then breaking the starting material over the scratch line (5).

5. Method according to claim 4, wherein parts (10) of wafer (1) material comprising the fluidic inlet (3) and outlet (4) of the shared capillary (2) and/or a connecting part (12) of the shared capillary (2) are lost.

6. Method as claimed in any of the foregoing claims, **characterized in that** step (b) is performed by arranging a channel on or in a first layer of the starting material and closing off this channel by arranging a second layer of the starting material thereon.

7. Method as claimed in any of the foregoing claims, **characterized in that** the starting material is a sheet material.

8. Method as claimed in any of the foregoing claims, **characterized in that** the starting material is made of a material chosen from the group comprising glass, silicon, plastics and ceramic.

9. Method as claimed in any of the foregoing claims, **characterized in that** the shared capillary (2) has a repeating pattern with a pitch corresponding to the pitch of the chips (6).

10. Method as claimed in any of the foregoing claims, **characterized in that** the starting material comprises at least three layers, wherein at least one shared capillary (2) is formed between a first layer and a second layer of the starting material, and wherein at least one shared capillary (2) is formed between the second layer and a third layer of the starting material.

11. Method according to claim 10, wherein the functionalization fluid for functionalizing the shared capillary (2) between the first layer and the second layer of the starting material is different from the functionalization fluid for functionalizing the shared capillary (2) between the second layer and the third layer of the starting material, such that the two capillaries each have a different function.

12. Method according to claim 10, wherein the functionalization fluid for functionalizing the shared capillary (2) between the first layer and the second layer of the starting material is the same as the functionalization fluid for functionalizing the shared capillary (2) between the second layer and the third layer of the starting material, such that the two capillaries will obtain the same function.

13. Method as claimed in any of the foregoing claims, **characterized in that** step (c) is performed by supplying a plurality of functionalization fluids to the shared capillary (2), wherein said plurality of functionalization fluids are supplied subsequently.

14. Method according to any one of the preceding claims, wherein the functionalization fluid is chosen from a group comprising: organosilicon compounds, hydrophilic coating solutions, hydrophobic coating solutions, grafting solutions, gel-based solutions and protein-based solutions.

15. Method according to claim 14, wherein by functionalizing the shared capillary (2) by running such functionalization fluids therethrough the channel surface of all chips (6) is functionalized by silanization, hydrophilization, hydrophobization, grafting of DNA fragments or synthetic oligonucleotides, gel loading for capillary (2) electrophoresis, or immobilization of biomolecules respectively.

## Patentansprüche

1. Verfahren zur Herstellung von Mikrofluid-Chips (6), welche zumindest eine Kapillare zum Durchfluss eines Fluids aufweisen, **gekennzeichnet durch** die folgenden Schritte:
(a) Bereitstellen eines Ausgangsmaterials;
(b) Bilden von zumindest einer gemeinsamen Kapillare in dem Ausgangsmaterial, wobei die gemeinsame Kapillare einen strömungstechnischen Einlass (3) und einen strömungstechnischen Auslass (4) umfasst;
(c) Funktionalisieren der Chips (6) durch Zuführen eines Funktionalisierungsfluids zu der gemeinsamen Kapillare; und
(d) Teilen des Ausgangsmaterials in separate Chips (6).

2. Verfahren gemäß Anspruch 1, wobei im Schritt (d) die Chips (6) aus einem Wafer (1) durch Schneiden des Wafers (1) auf solch eine Art und Weise getrennt werden, dass die gemeinsame Kapillare (2) auch geschnitten wird, wobei dadurch die geschnittenen Enden der gemeinsamen Kapillare (2) einen Einlass (3) oder einen Auslass (4) von den Chips (6) bilden.

3. Verfahren gemäß Anspruch 1 oder 2, wobei der Schritt (d) durchgeführt wird durch ein trockenes und/oder sauberes Trennverfahren.

4. Verfahren gemäß Anspruch 2, wobei der Schritt (d) durchgeführt wird durch zuerst Ritzen einer Ritzlinie (5) in dem Ausgangsmaterial und dann Brechen des Ausgangsmaterials an der Ritzlinie (5).

5. Verfahren gemäß Anspruch 4, wobei Teile (10) des Materials des Wafers (1), welche den strömungstechnischen Einlass (3) und Auslass (4) von der gemeinsamen Kapillare (2) und/oder ein Verbindungsteil (12) von der gemeinsamen Kapillare (2) aufweisen, verloren sind.

6. Verfahren gemäß irgendeinem der vorhergehenden Ansprüche, **dadurch gekennzeichnet, dass** der Schritt (b) durchgeführt wird durch Anordnen eines Kanals auf oder in einer ersten Schicht von dem Ausgangsmaterial und Abschließen dieses Kanals durch Anordnen einer zweiten Schicht von dem Ausgangsmaterial darauf.

7. Verfahren gemäß irgendeinem der vorhergehenden Ansprüche, **dadurch gekennzeichnet, dass** das Ausgangsmaterial ein Plattenmaterial ist.

8. Verfahren gemäß irgendeinem der vorhergehenden Ansprüche, **dadurch gekennzeichnet, dass** das Ausgangsmaterial hergestellt ist aus einem Material ausgewählt aus der Gruppe, welche Glas, Silizium, Kunststoff und Keramik umfasst.

9. Verfahren gemäß irgendeinem der vorhergehenden Ansprüche, **dadurch gekennzeichnet, dass** die gemeinsame Kapillare (2) ein sich wiederholendes Muster mit einem Abstand aufweist, welcher dem Abstand von den Chips (6) entspricht.

10. Verfahren gemäß irgendeinem der vorhergehenden Ansprüche, **dadurch gekennzeichnet, dass** das Ausgangsmaterial zumindest drei Schichten umfasst, wobei zumindest eine gemeinsame Kapillare (2) zwischen der ersten Schicht und der zweiten Schicht von dem Ausgangsmaterial gebildet ist, und wobei zumindest eine gemeinsame Kapillare (2) zwischen der zweiten Schicht und einer dritten Schicht von dem Ausgangsmaterial gebildet ist.

11. Verfahren gemäß Anspruch 10, wobei das Funktionalisierungsfluid zum Funktionalisieren der gemeinsamen Kapillare (2) zwischen der ersten Schicht und der zweiten Schicht von dem Ausgangsmaterial unterschiedlich ist zu dem Funktionalisierungsfluid zum Funktionalisieren der gemeinsamen Kapillare (2) zwischen der zweiten Schicht und der dritten Schicht von dem Ausgangsmaterial, so dass die zwei Kapillaren jeweils eine unterschiedliche Funktion aufweisen.

12. Verfahren gemäß Anspruch 10, wobei das Funktionalisierungsfluid zum Funktionalisieren der gemeinsamen Kapillare (2) zwischen der ersten Schicht und der zweiten Schicht von dem Ausgangsmaterial gleich ist zu dem Funktionalisierungsfluid zum Funktionalisieren der gemeinsamen Kapillare (2) zwischen der zweiten Schicht und der dritten Schicht von dem Ausgangsmaterial, so dass die zwei Kapillaren die gleiche Funktion erhalten werden.

13. Verfahren gemäß irgendeinem der vorhergehenden Ansprüche, **dadurch gekennzeichnet, dass** der Schritt (c) durchgeführt wird durch Zuführen einer Vielzahl von Funktionalisierungsfluiden zu der gemeinsamen Kapillare (2), wobei die Vielzahl von Funktionalisierungsfluiden nacheinander zugeführt wird.

14. Verfahren gemäß irgendeinem der vorhergehenden Ansprüche, wobei das Funktionalisierungsfluid ausgewählt ist aus einer Gruppe, welche siliziumorganische Verbindungen, hydrophile Beschichtungslösungen, hydrophobe Beschichtungslösungen, Veredelungslösungen, Gel-basierte Lösungen und Protein-basierte Lösungen umfasst.

15. Verfahren gemäß Anspruch 14, wobei durch Funktionalisieren der gemeinsamen Kapillare (2) durch Durchlaufenlassen solcher Funktionalisierungsfluide dadurch hindurch die Kanaloberfläche von allen Chips (6) funktionalisiert wird durch Silanisierung, Hydrophilierung, Hydrophobierung, Veredeln von DNA-Fragmenten oder synthetischen Oligonucleotiden, Beladung des Gels zur Kapillar-(2)-Elektrophorese bzw. Immobilisation der Biomoleküle.

## Revendications

1. Procédé de fabrication de plaquettes microfluidiques (6) comportant au moins un capillaire afin d'assurer l'écoulement d'un fluide à travers, **caractérisé par** les étapes de:
(a) préparation d'un matériau de base;
(b) formation d'au moins un capillaire partagé sur le matériau de base, ledit capillaire partagé comprenant une entrée fluidique (3) et une sortie fluidique (4);
(c) fonctionnalisation des plaquettes (6) en délivrant un fluide de fonctionnalisation sur le capillaire partagé; et
(d) découpe du matériau de base en plaquettes distinctes (6).

2. Procédé selon la revendication 1, dans lequel, dans l'étape (d) les plaquettes (6) sont séparés à partir d'une pastille (1) par découpe de la pastille (1) d'une telle manière que le capillaire partagé (2) est aussi coupé, les extrémités coupées du capillaire partagé (2) formant ainsi une entrée (3) ou sortie (4) des plaquettes (6).

3. Procédé selon la revendication 1 ou 2, dans lequel l'étape (d) est mise en œuvre par un procédé de découpe à sec et/ou propre.

4. Procédé selon la revendication 2, dans lequel l'étape (d) est réalisée en premier par rayurage d'une ligne de rupture (5) sur le matériau de base et ensuite par rupture du matériau de base sur la ligne de rupture (5).

5. Procédé selon la revendication 4, dans lequel des parties (10) de matériau de pastille (1) comprenant l'entrée (3) et la sortie (4) fluidique du capillaire partagé (2) et/ou une partie de raccordement (12) du capillaire partagé (2) sont perdues.

6. Procédé selon l'une quelconque des revendications précédentes, **caractérisé en ce que** l'étape (b) est mise en œuvre en formant un canal sur ou dans une première couche du matériau de base et en refermant ce canal en agençant une deuxième couche du matériau de base par dessus.

7. Procédé selon l'une quelconque des revendications précédentes, **caractérisé en ce que** le matériau de base est un matériau en feuille.

8. Procédé selon l'une quelconque des revendications précédentes, **caractérisé en ce que** le matériau de base est réalisé en un matériau choisi à partir du groupe comprenant du verre, du silicium, de la matière plastique et de la céramique.

9. Procédé selon l'une quelconque des revendications précédentes, **caractérisé en ce que** le capillaire partagé (2) présente un motif répétitif avec un pas correspondant au pas des plaquettes (6).

10. Procédé selon l'une quelconque des revendications précédentes, **caractérisé en ce que** le matériau de base comprend au moins trois couches, dans lequel au moins un capillaire partagé (2) est formé entre une première couche et une deuxième couche du matériau de base, et dans lequel au moins un capillaire partagé (2) est formé entre la deuxième couche et une troisième couche du matériau de base.

11. Procédé selon la revendication 10, dans lequel le fluide de fonctionnalisation destiné à assurer la fonctionnalisation du capillaire partagé (2) entre la première couche et la deuxième couche du matériau de base est différent du fluide de fonctionnalisation destiné à assurer la fonctionnalisation du capillaire partagé (2) entre la deuxième couche et la troisième couche du matériau de base, de telle sorte que les deux capillaires présentent chacun une fonction différente.

12. Procédé selon la revendication 10, dans lequel le fluide de fonctionnalisation destiné à assurer la fonctionnalisation du capillaire partagé (2) entre la première couche et la deuxième couche du matériau de base est identique au fluide de fonctionnalisation destiné à assurer la fonctionnalisation du capillaire partagé (2) entre la deuxième couche et la troisième couche du matériau de base, de telle sorte que les deux capillaires acquièrent la même fonction.

13. Procédé selon l'une quelconque des revendications précédentes, **caractérisé en ce que** l'étape (c) est mise en œuvre en délivrant une pluralité de fluides de fonctionnalisation au capillaire partagé (2), dans lequel les fluides de ladite pluralité de fluides de fonctionnalisation sont délivrés successivement.

14. Procédé selon l'une quelconque des revendications précédentes, dans lequel le fluide de fonctionnalisation est choisi à partir d'un groupe comprenant: des composés organosilicium, des solutions de revêtement hydrophiles, des solutions de revêtement hydrophobes, des solutions de greffe, des solutions à base de gel et des solutions à base de protéine.

15. Procédé selon la revendication 14, dans lequel, par fonctionnalisation du capillaire partagé (2) en faisant circuler de tels fluides de fonctionnalisation à travers, la surface de canal de toutes les plaquettes (6) est fonctionnalisée respectivement par silanisation, hydrophilisation, hydrophobisation, greffe de fragments d'ADN ou d'oligonucléotides synthétiques, chargement de gel pour électrophorèse du capillaire (2), ou immobilisation de biomolécules.
